# EUROPEAN PATENT SPECIFICATION

(11) **EP 4 007 396 B1**
(45) Date of publication and mention of the grant of the patent: **09.09.2026**
(21) Application number: 19939657.3
(22) Date of filing: 31.07.2019
(51) Int. Cl.: H04W 72/04, H04W 72/12, H04L 5/00

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(43) Date of publication of application: 01.06.2022
(73) Proprietor: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2019/030054
(87) International publication number: WO 2021/019736

(56) References cited:
- JP-A- 2018 514 163
- JP-A- 2019 125 815
- US-A1- 2022 104 224
- HUAWEI ET AL: "Review Summary for Al 7.1.3.2 related to long PUCCH", vol. RAN WG1, no. Chengdu, China; 20180908 - 20180912, 10 October 2018 (2018-10-10), XP051519295, Retrieved from the Internet <URL:http://www.3gpp.org/ftp/tsg%5Fran/WG1%5FRL1/TSGR1%5F94b/Docs/R1%2D1811970%2Ezip> [retrieved on 20181010]
- MCC SUPPORT: "Final Report of 3GPP TSG RAN WG1 #95 v1.0.0 (Spokane, USA, 12th - 16h November 2018)", vol. RAN WG1, no. Athens, Greece; 20190225 - 20190301, 21 February 2019 (2019-02-21), XP051599178, Retrieved from the Internet <URL:http://www.3gpp.org/ftp/tsg%5Fran/WG1%5FRL1/TSGR1%5F95/Report/Final%5FMinutes%5Freport%5FRAN1%2395%5Fv100%2Ezip> [retrieved on 20190221]

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (3rd generation partnership project (3GPP) Release (Rel) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In the existing LTE system (for example, 3rd Generation Partnership Project (3GPP) Rel. 8 to 14), a user terminal (user equipment (UE)) controls reception of a downlink shared channel (for example, a physical downlink shared channel (PDSCH)) based on downlink control information (DCI, also referred to as DL assignment or the like) from a base station. Also, the user terminal controls transmission of an uplink shared channel (for example, a physical uplink shared channel (PUSCH)) based on DCI (also referred to as UL grant or the like).

### Citation List

HUAWEI ET AL: "Review Summary for Al 7.1.3.2 related to long PUCCH", 3GPP DRAFT; R1-1811970, is a summary of a 3GPP TSG RAN meeting relating to long PUCCH.

US 2022/104224 A1relates to a method for transmitting, by a terminal, a PUSCH to a base station in a wireless communication system. The method comprises a step for receiving, from a base station, an RRC signal including configuration information on a semi-static uplink symbol, a flexible symbol, and a downlink symbol, a step for receiving a PDCCH for scheduling a PUSCH transmission including at least one PUSCH repetition, a step for determining whether at least one of the required number of symbols for transmitting the PUSCH repetition cannot transmit the PUSCH repetition and a step for transmitting the PUSCH repetition to the base station on the basis of the determination on whether the PUSCH repetition cannot be transmitted.

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In a future radio communication system (for example, New Radio (NR)), it is considered that a plurality of uplink (UL) channels are transmitted in a repetition unit shorter than a given time unit (for example, a slot). Alternatively, in the NR, it is considered that scheduling of at least one of a given channel or a given signal (also referred to as a channel/signal) across a slot boundary is supported in a given transmission occasion. For example, it is considered that a shared channel scheduled across the slot boundary (or across the slot boundary) is divided into a plurality of segments to control transmission or reception.

However, transmission durations of at least some of the plurality of UL channels and other UL channels (or UL signals) may overlap each other. Alternatively, it is also conceivable that the transmission durations of the UL channel divided into a plurality of segments and other UL channels (or UL signals) overlap each other. However, how to control such a case has not been sufficiently studied.

An object of the present disclosure is to provide a terminal and a radio communication method capable of appropriately transmitting a UL channel in a future radio communication system.

### Solution to Problem

The object of the invention is achieved by the subject-matter of the independent claims. An advantageous embodiment is defined in the dependent claim. Further examples are provided for facilitating the understanding of the invention.

A terminal according to an aspect of the present disclosure includes: a receiving section that receives information instructing or configuring transmission of a plurality of uplink shared channels using a repetition unit shorter than a slot; and a control section that performs a control to transmit uplink control information by using at least one of the uplink shared channels colliding with an uplink control channel in a case where transmission durations of at least one of the plurality of uplink shared channels and the uplink control channel used for transmission of the uplink control information collide with each other.

### Advantageous Effects of Invention

According to an aspect of the present disclosure, UL channel transmission can be appropriately performed in a future radio communication system.

### Brief Description of Drawings

Figs. 1A to 1F are diagrams illustrating an example of a transmission control in a case where a physical uplink shared channel (PUSCH) collides with a physical uplink control channel (PUCCH).
Fig. 2 is a diagram illustrating an example of a case where a single PUCCH collides with multiple PUSCHs.
Fig. 3 is a diagram illustrating an example of allocation of a shared channel (for example, the PUSCH).
Fig. 4 is a diagram illustrating an example of multi-segment transmission.
Fig. 5 is a diagram illustrating an example of a case where a segment PUSCH collides with the PUCCH.
Figs. 6A to 6C are diagrams illustrating an example of a transmission control in a case where the PUCCH collides with a plurality of PUSCHs.
Figs. 7A to 7D are diagrams illustrating an example of a transmission control in a case where the PUCCH collides with the segment PUSCH.
Figs. 8A to 8C are diagrams illustrating an example of a transmission control in a case where the PUCCH collides with a plurality of PUSCHs including the segment PUSCH.
Figs. 9A to 9C are diagrams illustrating another example of the transmission control in a case where the PUCCH collides with a plurality of PUSCHs.
Fig. 10 is a diagram illustrating an example of a schematic configuration of a radio communication system according to one embodiment.
Fig. 11 is a diagram illustrating an example of a configuration of a base station according to one embodiment.
Fig. 12 is a diagram illustrating an example of a configuration of a user terminal according to one embodiment.
Fig. 13 is a diagram illustrating an example of a hardware configuration of the base station and the user terminal according to one embodiment.

### Description of Embodiments

### (Collision Between UL Channels)

In the existing system (for example, 3rd Generation Partnership Project (3GPP) Rel. 15), in a case where transmission durations (transmission timings or time resources) of uplink (UL) channels collide or overlap each other, UL transmission is controlled on the basis of a given rule. Note that, in the following description, collision between a plurality of channels may be read as at least partial overlapping of transmission durations (transmission timings or time resources) of the plurality of channels.

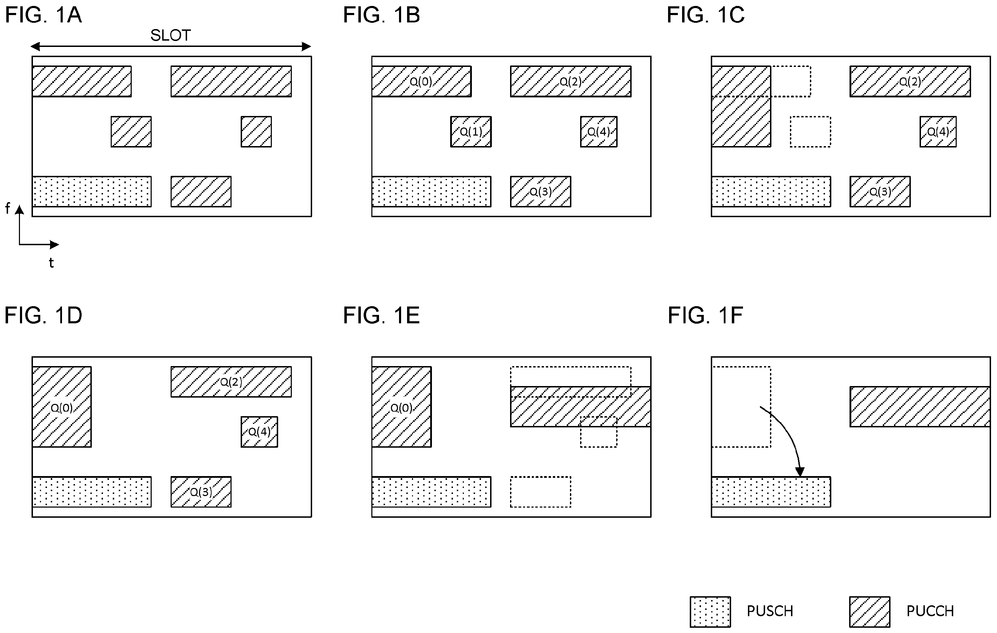

Fig. 1 illustrates an example of an operation in a case where an uplink control channel (for example, a physical uplink control channel (PUCCH)) and an uplink shared channel (for example, a physical uplink shared channel (PUSCH)) collide with each other. Here, a case where the PUCCH and the PUSCH are transmitted once in one slot (or a case where the number of repetitions is 1) is illustrated, which corresponds to a case where single PUCCH transmission and single PUSCH transmission collide with each other.

In such a case, collision between PUCCHs may be handled in each slot first. For example, a plurality of PUCCH resources whose transmission durations overlap each other are gathered into one PUCCH resource. Here, PUCCH #Q(0) and PUCCH #Q(1) are gathered into one PUCCH #Q(0) (see Figs. 1A to 1C). For example, other PUCCHs may be gathered into a PUCCH with an earlier starting symbol (a PUCCH with a longer duration in a case of the same starting symbol).

Similarly, PUCCH #Q(2), PUCCH #Q(3), and PUCCH #Q(4) are gathered into one PUCCH #Q(3) (see Figs. 1D and 1E). The PUCCHs (here, Q(0) and Q(3)) after the plurality of PUCCHs are gathered may have resources extended to at least one of frequency or time.

After the PUCCHs colliding with each other are gathered, in a case where the transmission durations of the PUCCH after the gathering and the PUSCH collide with each other, the UE drops the PUCCH. Further, the UE performs a control to multiplex or map (hereinafter, also simply referred to as multiplex) uplink control information (for example, UCI) to be transmitted using the PUCCH on or to the PUSCH and transmit the uplink control information (see Fig. 1F).

Here, a case where PUSCH #Q(0) is dropped and the UCI is allocated (or piggybacked) to the PUSCH is illustrated. The UCI may be at least one of a delivery acknowledgement signal (HARQ-ACK), a scheduling request (SR), or channel state information (CSI-RS).

As described above, in a case where the transmission durations of the single PUSCH and the single PUCCH overlap in the slot, the UE performs a control to transmit, by using the PUSCH, the UCI scheduled to be transmitted using the PUCCH.

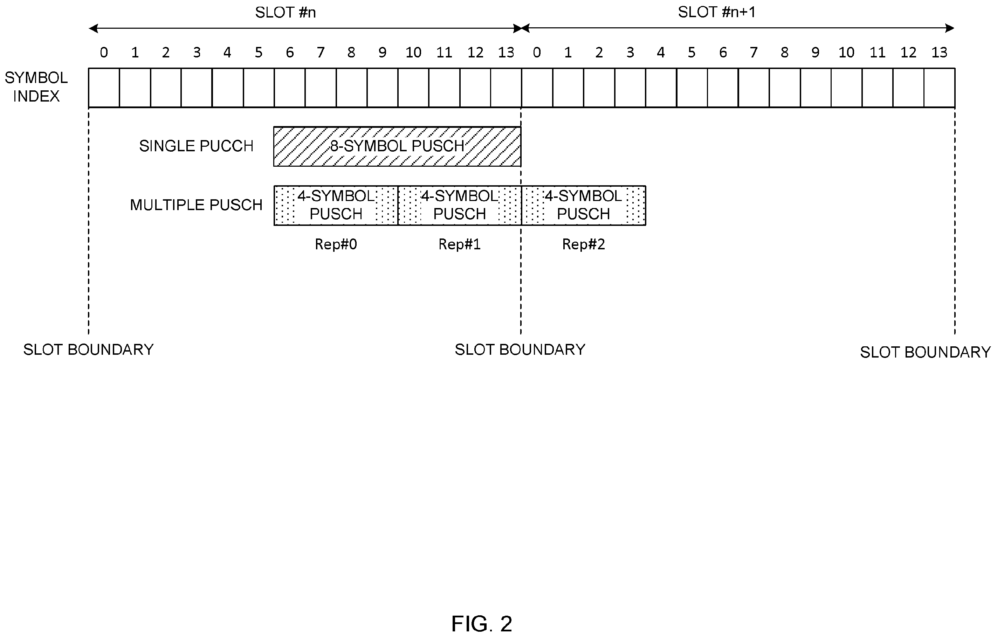

In a future radio communication system (for example, Rel. 16 or later), it is assumed that transmission of a plurality of PUSCHs (for example, PUSCH repetitive transmission) is supported by using a repetition unit shorter than a symbol. In this case, there may be a case where transmission of the PUCCH (for example, single PUCCH) collides with transmission of at least some of the plurality of PUSCHs (see Fig. 2).

Fig. 2 illustrates a case where some of the plurality of PUSCHs (here, the number of repetitions of the PUSCH is 3) overlap with the PUCCH. Note that transmission of a plurality of PUSCHs may be configuration within one slot or may be configured over a plurality of slots.

In such a case, how to control transmission of the PUCCH (or, the UCI scheduled to be transmitted on the PUCCH) and the PUSCH becomes a problem.

The present inventors have studied how to control a transmission operation in a case where a plurality of PUSCHs transmitted in a repetition unit shorter than a given time unit (for example, a slot) and the PUCCH (for example, single PUCCH) collide with each other, and conceived an aspect of the present invention.

### (Multi-Segment Transmission)

In an existing system (for example, 3GPP Rel. 15), it has been considered that the UE allocates a time domain resource (for example, a given number of symbols) within a single slot to an uplink shared channel (for example, the PUSCH) or a downlink shared channel (for example, a physical downlink shared channel (PDSCH)) of a certain transmission occasion (also referred to as a duration, an occasion, or the like).

The UE may transmit one or more transport blocks (TBs) by using the PUSCH allocated to a given number of contiguous symbols in a slot in a certain transmission occasion. In addition, the UE may transmit one or more TBs by using the PDSCH allocated to a given number of contiguous symbols in a slot in a certain transmission occasion.

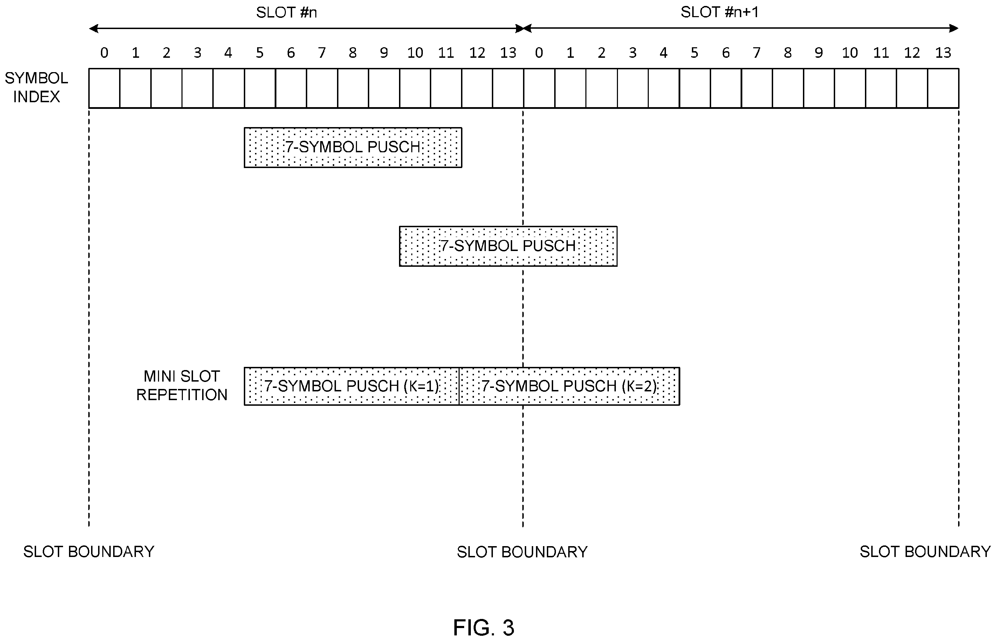

On the other hand, in a future radio communication system (for example, Rel. 16 or later), it is also assumed that a time domain resource is allocated across a slot boundary (or across a plurality of slots) to the PUSCH or the PDSCH of a certain transmission occasion (see Fig. 3). Fig. 3 illustrates a case where the PUSCH is allocated across the slot boundary in addition to the PUSCH allocated to a given number of contiguous slots (here, seven symbols) in one slot.

Specifically, the PUSCH allocated to symbols #10 to #13 in a slot #n and symbols #0 to #3 in a slot #n+1 is transmitted across the slot boundary. Furthermore, as illustrated in Fig. 3, it is also assumed that, in a case where repetitive transmission of the PUSCH is performed over a plurality of transmission occasions, at least some of the transmission occasions or the repetitive transmission is performed across the slot boundary.

Transmission of a channel/signal using the time domain resource allocated across the slot boundary (over a plurality of slots) is also referred to as multi-segment transmission, two-segment transmission, cross-slot boundary transmission, discontinuous transmission, multi-division transmission, and the like. Similarly, reception of a channel/signal transmitted across the slot boundary is also referred to as multi-segment reception, two-segment reception, cross-slot boundary reception, discontinuous reception, multi-division reception, and the like.

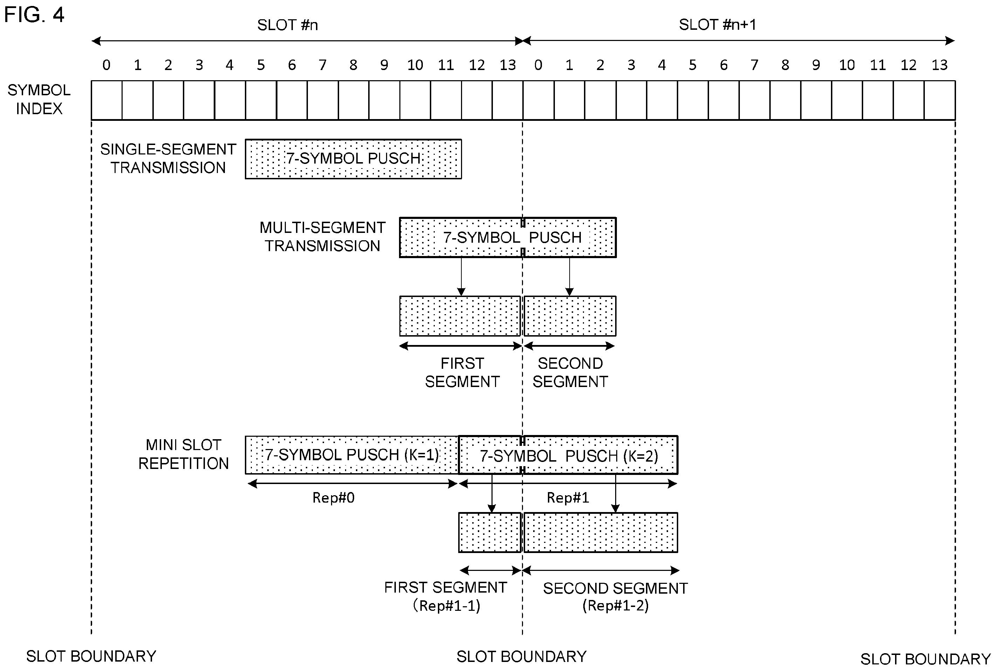

Fig. 4 is a diagram illustrating an example of the multi-segment transmission. Although the multi-segment transmission of the PUSCH is illustrated in Fig. 4, the PUSCH may be replaced with another signal/channel (for example, the PDSCH or the like). In the following description, a case where each segment is divided on the basis of the slot boundary will be described, but a reference for division into each segment is not limited to the slot boundary. In addition, in the following description, a case where the symbol length of the PUSCH is seven symbols will be described, but the symbol length is not limited thereto, and the same applies as long as the symbol length is longer than two symbols.

In Fig. 4, the UE may control transmission of the PUSCH allocated (or scheduled) in one slot or the PUSCH allocated across a plurality of slots on the basis of a given number of segments. In a case where the time domain resource over one or more slots is allocated to the PUSCH in a certain transmission occasion, the UE may divide (or split) the PUSCH into a plurality of segments and control transmission processing. For example, the UE may map each segment obtained by the division on the basis of the slot boundary to a given number of allocation symbols in the slot corresponding to each segment.

Here, the "segment" may be a given number of symbols in each slot allocated to one transmission occasion or data transmitted with the given number of symbols. For example, in a case where a head symbol of the PUSCH allocated in one transmission occasion is in a first slot and a tail symbol is in a second slot, for the PUSCH, one or more symbols included in the first slot may correspond to a first segment and one or more symbols included in the second slot may correspond to a second segment.

Note that the "segment" is a given data unit, and may be at least some of one or more TBs. For example, each segment may include one or more TBs, one or more code blocks (CBs), or one or more code block groups (CBGs). Note that one CB is a unit for encoding of the TB, and the TB may be divided into one or more segments (CB segmentation). In addition, one CBG may include a given number of CBs. Note that the segment obtained by the division may be referred to as a short segment.

The size (the number of bits) of each segment may be determined on the basis of, for example, at least one of the number of slots to which the PUSCH is allocated, the number of allocation symbols in each slot, or a proportion of the number of allocation symbols in each slot. Furthermore, the number of segments may be determined on the basis of the number of slots to which the PUSCH is allocated.

For example, the PUSCH allocated to the symbols # 5 to #11 in the slot #n is transmitted within a single slot (single segment) without crossing the slot boundary. As described above, the transmission of the PUSCH without crossing the slot boundary (the transmission of the PUSCH using a given number of symbols allocated in a single slot) may be referred to as single-segment transmission, one-segment transmission, non-segmented transmission, or the like.

On the other hand, the PUSCH allocated to the symbols #10 to #13 in the slot #n and the symbols #0 to #2 in the slot #n+1 is transmitted across the slot boundary. As described above, the transmission of the PUSCH across the slot boundary (the transmission of the PUSCH using a given number of symbols allocated in a plurality of slots) may be referred to as multi-segment transmission, two-segment transmission, cross-slot boundary transmission, or the like.

In addition, as illustrated in Fig. 4, in a case where repetitive transmission of the PUSCH is performed over a plurality of transmission occasions, the multi-segment transmission may be applied to at least some transmission occasions. For example, in Fig. 4, transmission of the PUSCH is repeated twice, the single-segment transmission is applied to the first PUSCH transmission, and the multi-segment transmission is applied to the second PUSCH transmission.

Further, the repetitive transmission may be performed in one or more time units. Each transmission occasion may be provided in each time unit. Each time unit may be, for example, a slot or a time unit shorter than the slot (also referred to as, for example, a mini slot, a sub-slot, a half-slot, or the like). For example, Fig. 4 illustrates the repetitive transmission using the mini slot of seven symbols, but a unit of the repetitive transmission (for example, the symbol length) is not limited to that illustrated in Fig. 4.

Further, the number of repetitions being 1 may indicate that the PUSCH or the PDSCH is transmitted once (no repetition is performed).

Further, the repetitive transmission may be referred to as slot-aggregation transmission, multi-slot transmission, or the like. The number N of repetitions (the number of aggregations or aggregation factor) may be specified for the UE by at least one of a higher layer parameter (for example, an RRC IE "pusch-AggregationFactor" or "pdsch-AggregationFactor") or downlink control information (DCI). Further, the transmission occasion, the repetition, the slot, the mini slot, or the like can be replaced with each other.

As described above, it is assumed that the PUSCH (also referred to as a nominal PUSCH) instructed to be allocated (or scheduled) crosses the slot boundary or a case where there is a symbol (for example, downlink (DL) or flexible) that is unavailable for PUSCH transmission in a range of one transmission (for example, seven symbols). In such a case, it is conceivable that the UE divides the PUSCH into a plurality of segments (or repetition) and controls the transmission.

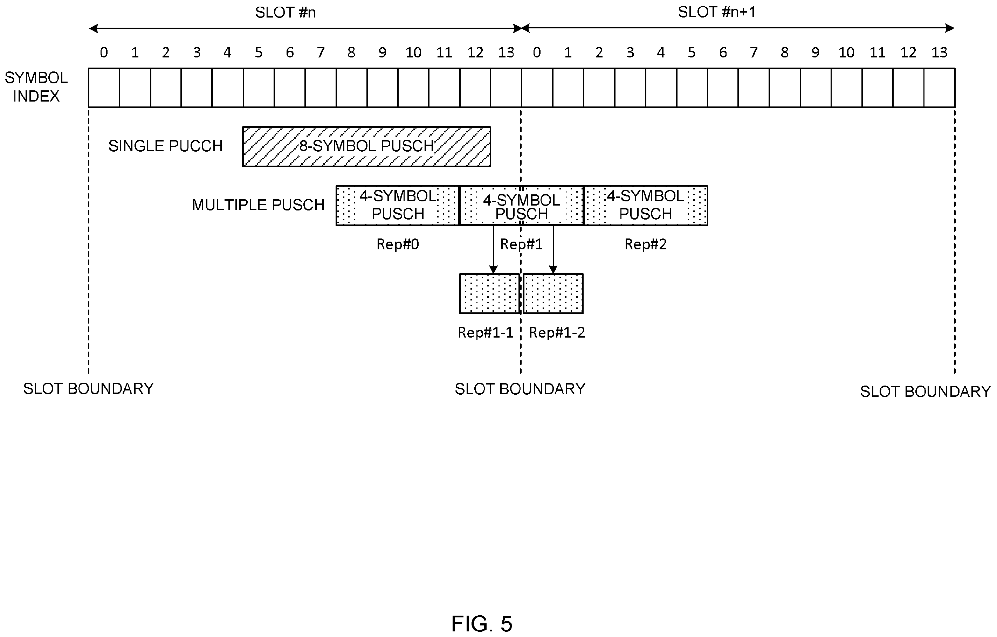

However, how to control transmission in a case where at least a part of the PUSCH divided into a plurality of segments collides with the PUCCH becomes a problem. For example, at least one PUSCH of the plurality of PUSCHs to which repetitive transmission is applied may be divided into a plurality of segments, and the transmission durations of at least some of the plurality of PUSCHs and the PUCCH may overlap (see Fig. 5).

Fig. 5 illustrates an example of a case where the transmission duration of the PUCCH (single PUSCH) whose transmission duration is eight symbols overlaps with the transmission duration of the PUSCH to which the repetitive transmission (here, the number of repetitions is 3) is applied. Specifically, Fig. 5 illustrates a case where the second PUSCH transmission (Rep#1) transmitted across the slot boundary is divided into a plurality of segments (here, Rep#1-1 and Rep#1-2), and the PUCCH collides with some PUSCHs (Rep#0 and Rep#1-1).

In such a case, how to control transmission of the PUCCH (or, the UCI scheduled to be transmitted on the PUCCH) and the PUSCH becomes a problem.

The present inventors have studied how to control a transmission operation in a case where the PUSCH divided into a plurality of segments and the PUCCH (for example, single PUCCH) collide with each other, and conceived an aspect of the present invention.

Hereinafter, an embodiment according to the present disclosure will be described in detail with reference to the drawings. Note that the following respective aspects may be used alone, or may be applied by combining at least two of them.

In the following description, a collision between the uplink control channel (for example, the single PUCCH) and a plurality of uplink shared channels (for example, multiple PUSCHs) will be described as an example, but an applicable signal/channel is not limited thereto. Further, the single PUCCH may be replaced with a single slot PUCCH, a single sub-slot PUCCH, or a single mini slot PUCCH. The multiple PUSCHs may be replaced with multiple sub-slot PUSCHs, multiple mini slot PUSCHs, or multiple symbol PUSCHs.

In addition, the PUCCH and the plurality of PUSCHs may be transmitted on the same carrier (or a cell, a component carrier, or a band) or may be transmitted on different carriers.

In addition, the following aspects may be applied to the PUCCH to which repetitive transmission (also referred to as repetition or nominal repetition) is applied or the PUSCH to which repetitive transmission is not applied.

### (First Aspect)

In a first aspect, a transmission control in a case where a first UL channel (for example, the PUCCH) and a second UL channel (for example, the PUSCH) collide with each other will be described. In the following description, a case where the PUCCH and the PUSCH use the same numerology (for example, a subcarrier spacing) and the PUSCH is transmitted using a repetition unit shorter than a slot will be described as an example, but the present invention is not limited thereto.

In a case where the transmission duration of the PUCCH and at least a part of the transmission durations of a plurality of PUSCHs (or repeated PUSCH) overlap with each other, the UE may control a transmission operation on the basis of at least one of the following Options 1-1 to 1-3 regardless of whether or not a segment PUSCH is included in the plurality of PUSCHs.

Note that, in the following description, three PUSCH transmissions (for example, the number of repetitions is 3) in which the repetition unit is shorter than the slot will be described as an example, but the number of times of transmission of the PUSCH is not limited thereto. A network (for example, a base station) may notify the UE of information regarding at least one of the number of repetitions of the PUSCH, the transmission duration of the PUSCH, or the transmission duration of the PUCCH by at least one of higher layer signaling or the DCI.

The transmission duration of the PUSCH may be determined on the basis of at least one of an allocated resource of the PUSCH, a starting symbol of the PUSCH, or the length (for example, symbol length) of the PUSCH. The transmission duration of the PUCCH may be determined on the basis of at least one of an allocated resource of the PUCCH, a starting symbol of the PUCCH, or the length (for example, symbol length) of the PUCCH.

### <Option 1-1>

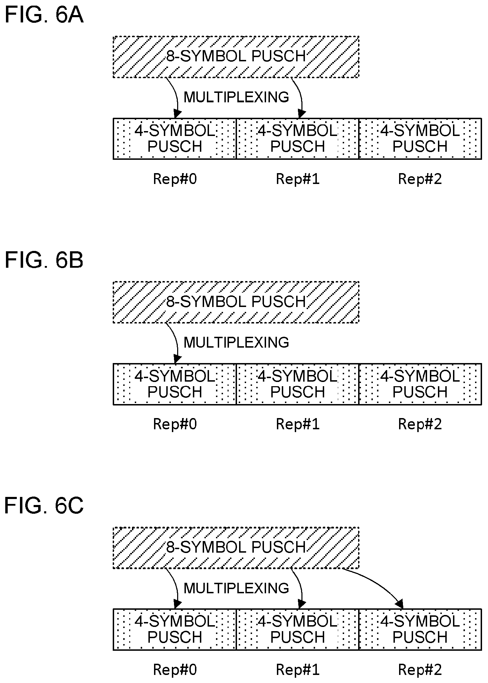

The UE may multiplex or map (hereinafter, also simply referred to as multiplex) the uplink control information (UCI) on or to the PUSCH colliding with the PUCCH and drop the PUCCH. For example, it is assumed that the PUCCH overlaps with a plurality of PUSCHs (for example, Rep#0 and Rep#1) among three PUSCH transmissions (Rep#0 to Rep#2) (see Fig. 6A). In this case, the UE may perform a control to transmit the UCI by using a plurality of PUSCHs (Rep#0 and Rep#1).

In Fig. 6A, the PUCCH may be disposed in one slot. In this case, since the UCI can be multiplexed on the PUSCH in the same slot, the multiplexing of the UCI (the UCI on the PUSCH) on the PUSCH can be controlled in units of slots.

Fig. 6A illustrates a case where the transmission duration of the PUCCH completely overlaps with the transmission durations of the PUSCHs corresponding to Rep#0 and Rep#1, but the present invention is not limited thereto. For example, in a case where the transmission duration of the PUCCH overlaps with a part of the transmission duration (for example, only the first half symbols) of the PUSCH corresponding to Rep#1, the transmission operation may be similarly controlled.

The UCI multiplexed on each of the plurality of PUSCHs (Rep#0 and Rep#1) may be UCI having the same content or may be UCI having different contents. For example, the UE may transmit the same HARQ-ACK by using a plurality of PUSCHs. Alternatively, the UE may transmit at least one of the HARQ-ACK or the SR by using one PUSCH, and may transmit another UCI (for example, CSI) by using another PUSCH. Alternatively, the UE may map one of the HARQ-ACK (or SR) and the CSI (for example, HARQ-ACK (or SR)) to a plurality of PUSCHs and drop the CSI-RS.

Even in a case where at least one of Rep#0 or Rep#1 is divided into a plurality of segments, the UE may perform a control to transmit the UCI by using Rep#1 and Rep#2.

As described above, the UE operation can be simplified by transmitting the UCI by using the PUSCH colliding with the PUCCH.

### <Option 1-2>

The UE may multiplex the UCI on some (for example, one PUSCH) of the plurality of PUSCHs colliding with the PUCCH and drop the PUCCH. For example, it is assumed that the PUCCH overlaps with a plurality of PUSCHs (for example, Rep#0 and Rep#1) among three PUSCH transmissions (Rep#0 to Rep#2). In this case, the UE may perform a control to transmit the UCI by using one PUSCH (here, Rep#1) of the plurality of PUSCHs (see Fig. 6B).

In Fig. 6B, the PUCCH may be disposed in one slot. In this case, since the UCI can be mapped to the PUSCH in the same slot, the multiplexing of the UCI (the UCI on the PUSCH) on the PUSCH can be controlled in units of slots.

Fig. 6B illustrates a case where the transmission duration of the PUCCH completely overlaps with the transmission durations of the PUSCHs corresponding to Rep#0 and Rep#1, but the present invention is not limited thereto. For example, in a case where the transmission duration of the PUCCH overlaps with a part of the transmission duration (for example, only the first half symbols) of the PUSCH corresponding to Rep#1, the transmission operation may be similarly controlled.

Among a plurality of PUSCHs colliding with the PUCCH, the PUSCH on which the UCI is to be multiplexed may be determined on the basis of a given condition. The UE may determine a specific PUSCH on which the UCI is to be multiplexed on the basis of at least one of the following Given Conditions 1 to 4.

### [Given Condition 1]

Among the plurality of PUSCHs colliding with the PUCCH, the first PUSCH or the last PUSCH in the time domain may be the specific PUSCH on which the UCI is to be multiplexed. Fig. 6B illustrates a case where the UCI is multiplexed on the first PUSCH (Rep#0) among the plurality of PUSCHs colliding with the PUCCH. As a result, the transmission timing of the UCI can be advanced.

### [Given Condition 2]

Among the plurality of PUSCHs colliding with the PUCCH, the PUSCH having the longest transmission duration or the PUSCH having the shortest transmission duration may be the specific PUSCH on which the UCI is to be multiplexed.

For example, it is assumed that the PUSCH having a first transmission duration or PUSCH length (for example, two symbols) and the PUSCH having a second transmission duration or PUSCH length (for example, four symbols) longer than the first transmission duration collide with the PUCCH. In a case where priority of the PUSCH having a long transmission duration is set high, the UE multiplexes the UCI on the PUSCH to which a 4-symbol transmission duration is applied. By multiplexing the UCI on the PUSCH having a long transmission duration, a lower modulation and coding scheme (MCS) can be selected, such that decoding reliability can be improved.

### [Given Condition 3]

Among the plurality of PUSCHs colliding with the PUCCH, the PUSCH having the lowest coding rate (CR) or the PUSCH having the highest coding rate (CR) may be the specific PUSCH on which the UCI is to be multiplexed.

For example, it is assumed that the PUSCH to which a first coding rate (for example, 0.12) is applied and the PUSCH to which a second coding rate (for example, 0.38) higher than the first coding rate is applied collide with the PUCCH. In a case where the priority of the PUSCH with a low coding rate is set high, the UE multiplexes the UCI on the PUSCH to which the first coding rate is applied. By multiplexing the UCI on the PUSCH with a low coding rate, decoding reliability can be improved.

### [Given Condition 4]

Among the plurality of PUSCHs overlapping the PUCCH, the PUSCH having the longest duration or the PUSCH having the shortest duration of collision with the PUCCH may be set as the specific PUSCH to which the UCI is mapped.

For example, it is assumed that the first PUSCH and the second PUSCH are configured to have the same PUSCH length, and the transmission duration of the PUCCH overlaps with the entire transmission duration of the first PUSCH and a part (for example, the first half symbols) of the transmission duration of the second PUSCH. In a case where the priority of the PUSCH whose overlapping duration with the PUCCH is long is set high, the UE may multiplex the UCI on the first PUSCH.

Note that the UE may perform a control to transmit the UCI by using Rep#0 even in a case where the specific PUSCH (Rep#0 in Fig. 6) on which the UCI is multiplexed is divided into a plurality of segments.

As described above, in a case where the PUCCH and a plurality of PUSCHs collide with each other, the load of the UE operation can be reduced by transmitting the UCI using some of the plurality of PUSCHs.

### <Option 1-3>

In a case where the PUCCH and some of a plurality of repeatedly transmitted PUSCHs collide with each other, a control may be performed so that the UCI is transmitted using the PUSCH that does not overlap with the PUCCH. For example, in addition to the PUSCH that collides with the PUCCH, the UE may also multiplex the UCI on another PUSCH that does not collide with the PUCCH and drop the PUCCH.

For example, it is assumed that the PUCCH collides with a plurality of PUSCHs (for example, Rep#0 and Rep#1) among three PUSCH transmissions (Rep#0 to Rep#2). In this case, the UE performs a control to transmit the UCI by using the PUSCH (Rep#2) that does not overlap with the PUCCH in addition to the PUSCH that overlaps with the PUCCH (see Fig. 6C). That is, in a case where the PUCCH and at least some of the plurality of repeatedly transmitted PUSCHs collide with each other, the UE may transmit the UCI by using all the repeatedly transmitted PUSCHs.

In Fig. 6C, the PUCCH may be disposed in one slot. In this case, the UCI can be multiplexed on the PUSCH in the same slot (or the PUSCH in the same slot and the PUSCH in another slot). Consequently, decoding accuracy can be improved by performing soft combining on a reception side (for example, a base station side).

The UCI multiplexed on each of the plurality of PUSCHs (Rep#1 to Rep#3) may be UCI having the same content or may be UCI having different contents. For example, the UE may transmit the same HARQ-ACK by using a plurality of PUSCHs. Alternatively, the UE may transmit at least one of the HARQ-ACK or the SR by using one PUSCH, and may transmit another UCI (for example, CSI) by using another PUSCH. Alternatively, the UE may multiplex one of the HARQ-ACK (or SR) and the CSI (for example, HARQ-ACK (or SR)) on a plurality of PUSCHs and drop the CSI-RS.

Even in a case where at least one of Rep#0 to Rep#2 is divided into a plurality of segments, the UE may perform a control to transmit the UCI by using Rep#0 to Rep#2.

### <Control for Multiplexing UCI on Segment PUSCH>

In a case where the PUSCH on which the UCI is to be multiplexed is the PUSCH divided into a plurality of segments, the UE may control multiplexing on each segment on the basis of a given condition. For example, in a case of multiplexing the UCI on the PUSCH divided into a plurality of segments, the UE may apply at least one of the following Options A and B (B-1 to B-4). The UE may apply at least one of Option A or Option B and Options 1-1 to 1-3 in combination.

### <Option A>

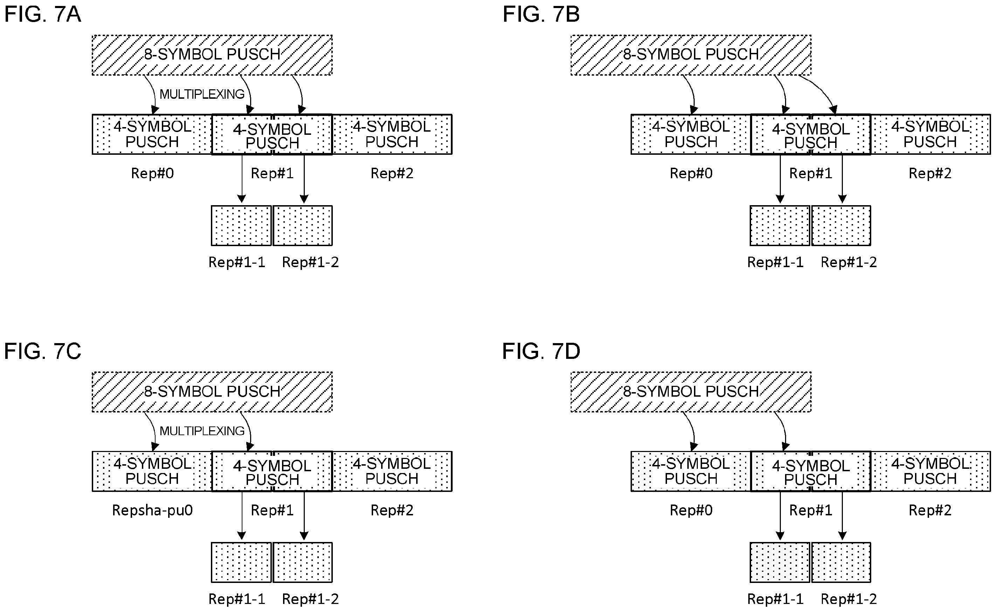

The UCI may be mapped to a plurality of divided PUSCH segments. For example, in a case where the PUCCH and both (for example, both Rep#1-1 and Rep#1-2) of a plurality of divided segment PUSCHs collide with each other, the UCI may be multiplexed on the plurality of segment PUSCHs (see Fig. 7A).

Alternatively, in a case where the PUCCH collides with one (for example, Rep#1-1) of the plurality of divided segment PUSCHs, the UE may multiplex the UCI on the plurality of segment PUSCHs (for example, Rep#1-1 and Rep#1-2) (see Fig. 7B).

The UCI multiplexed on each of the plurality of segment PUSCHs (Rep#1-1 and Rep#1-2) may be UCI having the same content or may be UCI having different contents. For example, the UE may transmit the same HARQ-ACK by using a plurality of segment PUSCHs. As a result, it is possible to improve the coverage in a case where transmission is performed using the segment PUSCH.

Note that Figs. 7A and 7B illustrate a case of being combined with Option 1-1, but the present invention is not limited thereto.

### <Option B>

The UCI may be multiplexed on some (for example, one PUSCH segment) of the plurality of divided PUSCH segments. For example, in a case where the PUCCH and both (for example, Rep#1-1 and Rep#1-2) of the plurality of divided segment PUSCHs collide with each other, the UCI may be multiplexed on one of the segment PUSCHs (see Fig. 7C).

Alternatively, in a case where the PUCCH and one (for example, Rep#1-1) of the plurality of divided segment PUSCHs collide with each other, the UE may multiplex the UCI on one of the segment PUSCHs (see Fig. 7D).

Note that Option A may be applied when both the PUCCH and the plurality of segment PUSCHs collide with each other, and Option B may be applied when the PUCCH and one of the plurality of segment PUSCHs collide with each other.

Note that Figs. 7C and 7D illustrate a case of being combined with Option 1-1, but the present invention is not limited thereto.

In a case where Option B is applied, the segment PUSCH on which the UCI is to be multiplexed may be determined on the basis of a given condition. The UE may determine a specific segment PUSCH on which the UCI is to be multiplexed on the basis of at least one of the following Options B-1 to B-4.

### [Option B-1]

Among the plurality of segment PUSCHs, the first segment PUSCH (for example, Rep#1-1) in the time domain may be the specific segment PUSCH on which the UCI is to be multiplexed.

Alternatively, among the plurality of segment PUSCHs, the last (or second) segment PUSCH (for example, Rep#1-2) in the time domain may be the specific segment PUSCH on which the UCI is to be multiplexed.

In this way, the UE operation can be simplified by determining the segment PUSCH on which the UCI is to be multiplexed in advance.

### [Option B-2]

Among the plurality of segment PUSCHs, the segment PUSCH having the longest transmission duration or the segment PUSCH having the shortest transmission duration may be the specific segment PUSCH to which the UCI is to be mapped.

For example, it is assumed that a first segment PUSCH (for example, Rep#1-1) obtained by the division has the first transmission duration or PUSCH length, and a second segment PUSCH (for example, Rep#1-2) has a second transmission duration or PUSCH length longer than the first transmission duration. In a case where the priority of the segment PUSCH having a long transmission duration is set high, the UE multiplexes the UCI on the second segment PUSCH. By multiplexing the UCI on the segment PUSCH having a long transmission duration, a lower MCS can be selected, such that decoding reliability can be improved.

### [Option B-3]

Among the plurality of segment PUSCHs, the segment PUSCH having the lowest coding rate (CR) or the segment PUSCH having the highest coding rate may be set as the specific segment PUSCH to which the UCI is to be mapped.

For example, it is assumed that the PUSCH to which the UCI is mapped is divided into the first segment PUSCH (for example, Rep#1-1) to which the first coding rate is applied and the second segment PUSCH (for example, Rep#1-2) to which the second coding rate higher than the first coding rate is applied. In a case where the priority of the segment PUSCH with a low coding rate is set high, the UE multiplexes the UCI on the first segment PUSCH to which the first coding rate is applied. By multiplexing the UCI on the segment PUSCH with a low coding rate, decoding reliability can be improved.

### [Option B-4]

The segment PUSCH on which the UCI is to be multiplexed may be determined on the basis of information whose notification is performed from the network (for example, the base station). For example, the UE may determine the segment PUSCH to which the UCI is to be mapped on the basis of information whose notification is performed by at least one of the downlink control information whose notification is performed from the base station or higher layer signaling.

Alternatively, the UE may determine the segment PUSCH on which the UCI is to be multiplexed on the basis of a radio network temporary identifier (RNTI) applied to the PUSCH or a physical downlink control channel (PDCCH) (or DCI) that schedules the PUSCH.

As described above, in a case where the PUSCH on which the UCI is multiplexed is the PUSCH divided into a plurality of segments, it is possible to appropriately transmit the UCI using the segment PUSCH by controlling the multiplexing of the UCI on the basis of a given condition.

### (Second Aspect)

In a second aspect, a transmission control different from that of the first aspect in a case where the first UL channel (for example, the PUCCH) and the second UL channel (for example, the PUSCH) collide with each other will be described. In the following description, a case where the PUCCH and the PUSCH use the same numerology (for example, a subcarrier spacing) and the PUSCH is transmitted using a repetition unit shorter than a slot will be described as an example, but the present invention is not limited thereto.

In a case where the PUCCH and at least some of a plurality of PUSCHs (alternatively, repeated PUSCH) collide with each other, the UE may perform a control to transmit the UCI by using the PUSCH other than the PUSCH divided into a plurality of segments. That is, the UE may perform a control so that the UCI is not multiplexed on the PUSCH divided into a plurality of segments (or the segment PUSCH).

For example, in a case where the segment PUSCH is included in the plurality of repeatedly transmitted PUSCHs, the UE may control the transmission operation on the basis of at least one of the following Options 2-1 to 2-3.

Note that, in the following description, three PUSCH transmissions (for example, the number of repetitions is 3) in which the repetition unit is shorter than the slot will be described as an example, but the number of times of transmission of the PUSCH is not limited thereto. The network (for example, the base station) may notify the UE of information regarding at least one of the number of repetitions of the PUSCH, the transmission duration of the PUSCH, or the transmission duration of the PUCCH by at least one of higher layer signaling or the DCI.

### <Option 2-1>

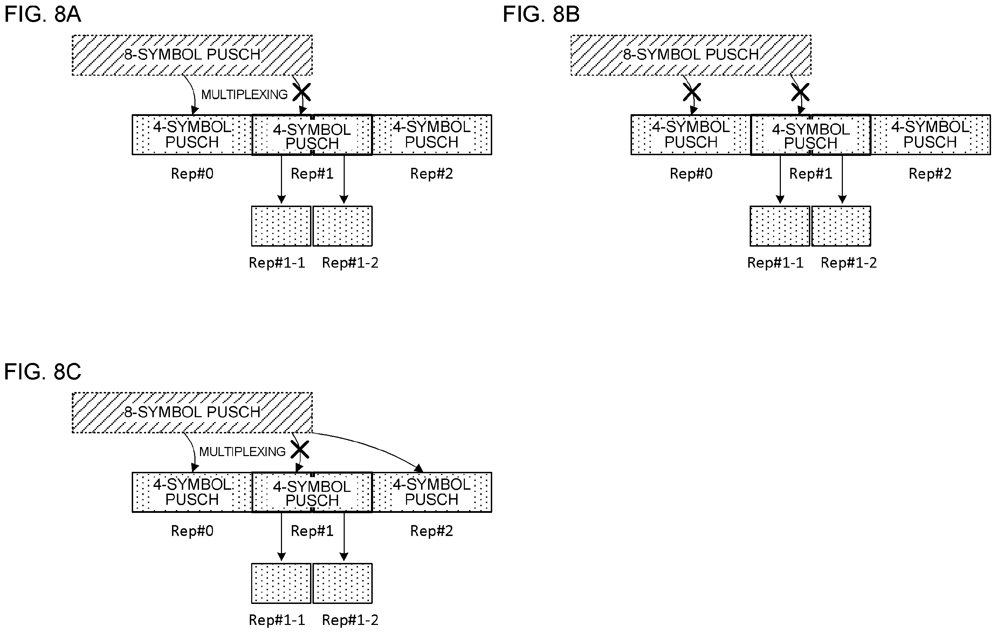

The UE may multiplex the UCI on the PUSCH other than the segment PUSCH among the PUSCHs colliding with the PUCCH and drop the PUCCH. For example, in a case where the PUCCH collides with a plurality of PUSCHs (for example, Rep#0 and Rep#1) among three PUSCH transmissions (Rep#0 to Rep#2), a control is performed so that the UCI is transmitted using the PUSCH excluding the segment PUSCH among the plurality of PUSCHs (see Fig. 8A).

Here, Rep#1 is divided into a plurality of segment PUSCHs (Rep#1-1 and Rep#1-2). The UE may perform a control to map the UCI to Rep#0 and not to multiplex the UCI on Rep#1.

In this manner, the transmission processing operation can be simplified by performing a control not to multiplex the UCI on the segment PUSCH (or not to transmit the UCI by using the segment PUSCH). For example, the UE does not need to perform the transmission processing in consideration of whether or not the segment PUSCH has a resource or a size sufficient for the multiplexing of the UCI. In addition, the base station does not need to perform scheduling in consideration of whether or not the segment PUSCH has a resource or a size sufficient for the multiplexing of the UCI.

### <Option 2-2>

The UE may multiplex the UCI on some (for example, one PUSCH other than the segment PUSCH) of the plurality of PUSCHs colliding with the PUCCH and drop the PUCCH. For example, when the PUCCH overlaps with a plurality of PUSCHs (for example, Rep#0 and Rep#1) among three PUSCH transmissions (Rep#0 to Rep#2), a control may be performed so that the UCI is transmitted using one of the plurality of PUSCHs (see Fig. 8B).

Fig. 8B illustrates a case where the UE selects Rep#1 among a plurality of PUSCHs (for example, Rep#0 and Rep#1) and the Rep#1 corresponds to the segment PUSCH. The UE controls the UCI not to be multiplexed on the segment PUSCH (Rep#1). In this case, the UE may perform a control not to transmit the UCI, or may perform a control to transmit the UCI by using the PUSCH (for example, at least one of Rep#0 or Rep#2) other than the segment PUSCH.

Note that, among a plurality of PUSCHs colliding with the PUCCH, the PUSCH on which the UCI is to be multiplexed may be determined on the basis of a given condition. The UE may determine a specific PUSCH on which the UCI is to be multiplexed on the basis of at least one of the following Given Conditions 0 to 4. The respective given conditions may be applied in combination. For example, another given condition may be applied in a case where Given Condition 0 is not satisfied (for example, in a case where the PUSCHs overlapping with the PUCCH do not include the segment PUSCH).

### [Given Condition 0]

The PUSCH that is not divided into a plurality of segments among a plurality of PUSCHs colliding with the PUCCH may be the specific PUSCH. For example, in Fig. 8B, the UE may perform a control to multiplex the UCI on the PUSCH (Rep#0) that is not divided into segments among the plurality of PUSCHs overlapping with the PUCCH.

As Given Conditions 1 to 4, Given Conditions 1 to 4 described above in the first aspect may be used.

As described above, in a case where the PUCCH and a plurality of PUSCHs overlap with each other, the load of the UE operation can be reduced by transmitting the UCI using some (the PUSCH other than the segment PUSCH) of the plurality of PUSCHs.

### <Option 2-3>

In a case where the PUCCH and some of a plurality of repeatedly transmitted PUSCHs collide with each other, the UE may be controlled so that the UCI is transmitted using the PUSCH that does not overlap with the PUCCH (the PUSCH other than the segment PUSCH). For example, in addition to the PUSCH overlapping with the PUCCH (the PUSCH other than the segment PUSCH), the UE may also multiplex the UCI on another PUSCH that does not overlap with the PUCCH (the PUSCH other than the segment PUSCH) and drop the PUCCH.

For example, it is assumed that the PUCCH overlaps with a plurality of PUSCHs (for example, Rep#0 and Rep#1) among three PUSCH transmissions (Rep#0 to Rep#2), and Rep#1 corresponds to the segment PUSCH. In such a case, the UE performs a control to transmit the UCI by using the non-segment PUSCH (Rep#2) that does not overlap with the PUCCH in addition to the non-segment PUSCH (Rep#0) that overlaps with the PUCCH (see Fig. 8C).

That is, the UE may transmit the UCI by using all the PUSCHs except the segment PUSCH in a case where the PUCCH and some of the plurality of repeatedly transmitted PUSCHs collide with each other.

In this manner, the transmission processing operation can be simplified by performing a control not to multiplex the UCI on the segment PUSCH (or not to transmit the uplink control information by using the segment PUSCH). For example, the UE does not need to perform the transmission processing in consideration of whether or not the segment PUSCH has a resource or a size sufficient for the multiplexing of the UCI. In addition, the base station does not need to perform scheduling in consideration of whether or not the segment PUSCH has a resource or a size sufficient for the multiplexing of the UCI.

### (Third Aspect)

In a third aspect, a case where any one of the first UL channel (for example, the PUCCH) and the second UL channel (for example, the PUSCH) colliding with each other is dropped will be described.

In a case where the transmission duration of the PUCCH (for example, single PUCCH) and at least a part of the transmission durations of the plurality of PUSCHs (for example, multiple PUSCHs) overlap with each other, the UE may perform a control to drop any one of the channels.

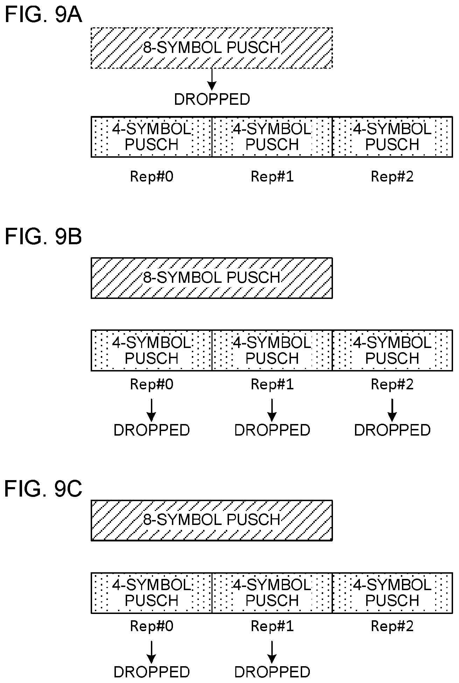

For example, when the PUCCH overlaps with a plurality of PUSCHs (for example, Rep#0 and Rep#1) among three PUSCH transmissions (Rep#0 to Rep#2), the UE may perform a control to transmit the plurality of PUSCHs and drop the PUCCH (or the UCI) (see Fig. 9A). In this case, the UE may perform a control not to transmit the uplink control information.

Alternatively, when the PUCCH overlaps with a plurality of PUSCHs (for example, Rep#0 and Rep#1) among three PUSCH transmissions (Rep#0 to Rep#2), the UE may perform a control to transmit the PUCCH and drop the PUSCHs. In this case, the UE may perform a control to drop the PUSCH (for example, Rep#2) that does not overlap with the PUCCH in addition to the PUSCHs (for example, Rep#0 and Rep#1) that collide with the PUCCH (see Fig. 9B).

Alternatively, the UE may perform a control to drop only the PUSCH (for example, Rep#0 and Rep#1) that overlaps with the PUCCH and transmit the PUSCH (for example, Rep#2) that does not overlap with the PUCCH (see Fig. 9C). As a result, both the PUCCH and the PUSCH can be transmitted in a case where a duration in which the PUCCH collides with the plurality of PUSCHs is short.

Note that the configurations illustrated in Figs. 9B and 9C may be applied to a collision between transmission of a plurality of PUCCHs (multiple PUCCHs) and transmission of a plurality of PUSCHs (multiple PUSCHs).

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

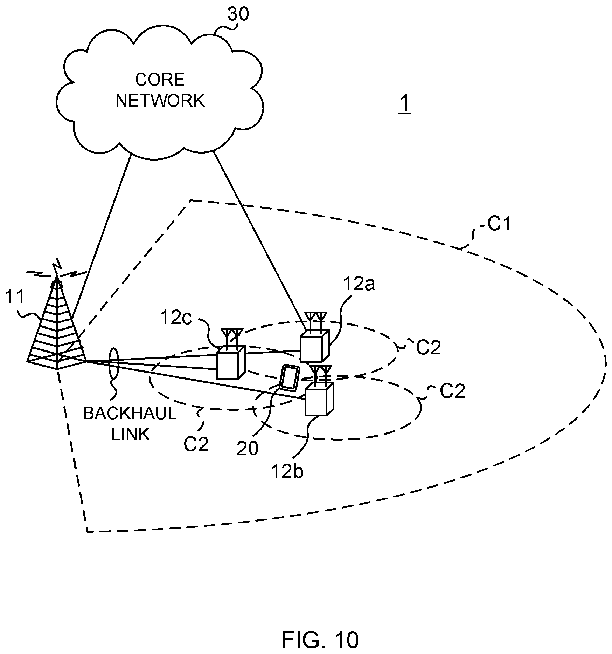

Fig. 10 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by 3rd generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

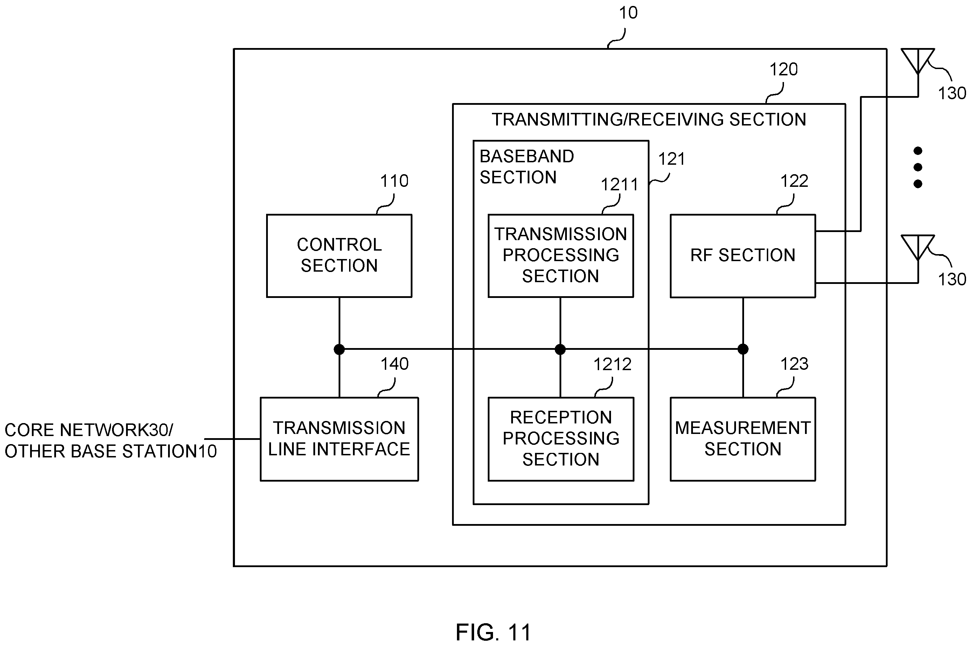

Fig. 11 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, to transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

Note that the transmitting/receiving section 120 may transmit information instructing or configuring transmission of a plurality of uplink shared channels using a repetition unit shorter than a slot. For example, the transmitting/receiving section 120 may notify the UE of the transmission of the plurality of uplink shared channels by using at least one of higher layer signaling or the DCI. The transmitting/receiving section 120 may include, in the DCI for scheduling the downlink shared channel, information regarding a transmission timing of the UCI and information regarding the PUCCH resource and perform notification of the DCI.

In a case where the transmission durations of at least one of the plurality of uplink shared channels and the uplink control channel used for transmitting the uplink control information collide with each other, the control section 110 may perform a control so that the uplink control information is transmitted by using at least one of the uplink shared channels that collide with the uplink control channel.

### (User Terminal)

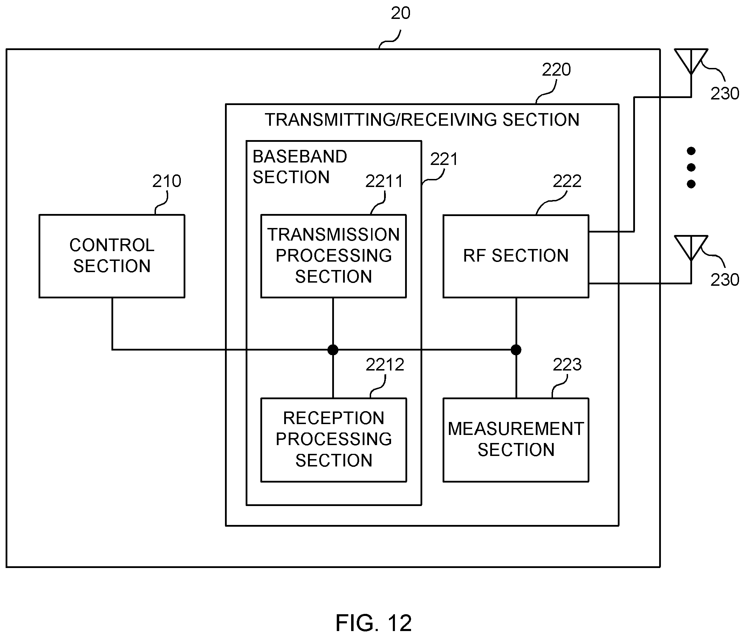

Fig. 12 is a diagram illustrating an example of a configuration of the user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive information instructing or configuring transmission of a plurality of uplink shared channels using a repetition unit shorter than a slot. For example, the transmitting/receiving section 220 may receive the plurality of transmitted uplink shared channels by using at least one of higher layer signaling or the DCI. The transmitting/receiving section 220 may receive information regarding the transmission timing of the UCI and the information regarding the PUCCH resource by using the DCI for scheduling the downlink shared channel.

In a case where the transmission durations of at least one of the plurality of uplink shared channels and the uplink control channel used for transmitting the uplink control information collide with each other, the control section 210 may perform a control so that the uplink control information is transmitted by using at least one of the uplink shared channels that collide with the uplink control channel.

In a case where the uplink control channel collides with the plurality of uplink shared channels, the control section 210 may perform a control to transmit the uplink control information by using some of the plurality of uplink shared channels.

The control section 210 may determine the uplink shared channel used for transmission of the uplink control information on the basis of at least one of the transmission timing of the uplink shared channel, the symbol length of the uplink shared channel, or the coding rate applied to the uplink shared channel.

The control section 210 may perform a control to transmit the uplink control information by using the uplink shared channel that does not collide with the uplink control channel.

In a case where at least one of the plurality of uplink shared channel transmissions is divided into a plurality of segments, the control section 210 may perform a control to transmit the uplink control information by using the uplink shared channel that is not divided into segments.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

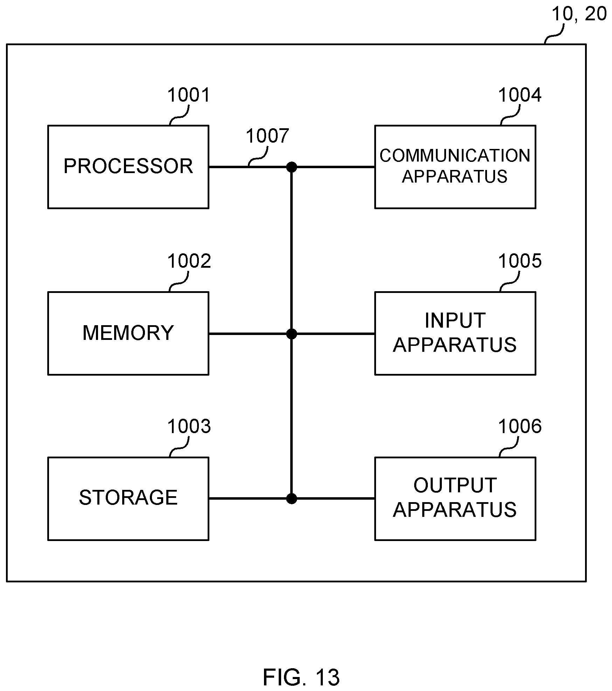

For example, the base station, the user terminal, or the like according to one embodiment of the present disclosure may function as a computer that executes the processing of the radio communication method in the present disclosure. Fig. 13 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is illustrated, a plurality of processors may be provided. Further, the processing may be executed by one processor, or the processing may be executed by two or more processors in sequence or by using other methods. Note that the processor 1001 may be implemented by one or more chips.

Each of functions of the base station 10 and the user terminal 20 is implemented by causing given software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the entire computer by operating, for example, an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM) or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

Further, these apparatuses such as the processor 1001 and the memory 1002 are connected to each other by the bus 1007 to communicate information. The bus 1007 may be configured by using a single bus, or may be configured by using a different bus for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented with the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be interchangeable. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more durations (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter applied to at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

The radio frame, the subframe, the slot, the mini slot, and the symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and the like, instead of a "subframe".

Here, the TTI refers to the minimum time unit of scheduling in radio communication, for example. For example, in the LTE system, a base station performs scheduling to allocate radio resources (a frequency bandwidth and transmit power that can be used in each user terminal and the like) to each user terminal in TTI units. Note that the definition of the TTI is not limited thereto.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time duration exceeding 1 ms, and the short TTI (for example, the shortened TTI or the like) may be replaced with a TTI having a TTI length less than the TTI length of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Also, the RB may include one or more symbols in the time domain, and may be one slot, one mini slot, one subframe, or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Furthermore, information, a parameter, or the like described in the present disclosure may be represented in absolute values, represented in relative values with respect to given values, or represented by using another corresponding information. For example, a radio resource may be specified by a given index.

Names used for the parameters and the like in the present disclosure are not restrictive names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers or a direction from lower layers to higher layers. Information, signals and the like may be input and output via a plurality of network nodes.

The information, signals and the like that are input and output may be stored in a specific location (for example, in a memory), or may be managed in a control table. The information, signals and the like to be input and output can be overwritten, updated or appended. The output information, signals, and the like may be deleted. The information, signals and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Further, notification of given information (for example, notification of "being X") is not limited to explicit notification but may be performed implicitly (for example, by not performing notification of the given information or by performing notification of another piece of information).

Judging may be made in values represented by one bit (0 or 1), may be made in Boolean values that represent true or false, or may be made by comparing numerical values (for example, comparison with a given value).

Regardless of whether or not being referred to as software, firmware, middleware, a microcode, or a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station or a base station subsystem that performs a communication service in this coverage.

In the present disclosure, the terms such as mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a

(manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a certain operation.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the scope of the invention defined by the appended claims.

## Claims

1. A terminal (20) comprising:
a transmitting section (220) configured to transmit an uplink shared channel, PUSCH, repetition transmission that crosses at least one of a slot boundary and a symbol for downlink, DL, transmission by dividing the repetition transmission into a plurality of segments at the at least one of a slot boundary and a symbol for downlink, DL, transmission; and
a control section (210) configured to, when the PUSCH repetition transmission overlaps an uplink control channel, PUCCH, transmission, control to transmit at least one of delivery acknowledgement information, HARQ-ACK, and channel state information, CSI, using a first segment in a time domain among the plurality of segments.

2. A radio communication method for a terminal (20), comprising:
transmitting an uplink shared channel, PUSCH, repetition transmission that crosses at least one of a slot boundary and a symbol for downlink, DL, transmission by dividing the repetition transmission into a plurality of segments at the at least one of a slot boundary and a symbol for downlink, DL, transmission; and
when the PUSCH repetition transmission overlaps an uplink control channel, PUCCH, transmission, controlling to transmit at least one of delivery acknowledgement information, HARQ-ACK, and channel state information, CSI, using a first segment in a time domain among the plurality of segments.

3. A system comprising a terminal according to claim 1 and a base station (10) comprising a receiving section configured to receive the PUSCH repetition transmission which is divided into the plurality of segments.

## Patentansprüche

1. Endgerät (20), umfassend:
einen Sendeabschnitt (220), der ausgebildet ist, eine Wiederholungsübertragung eines Aufwärtsverbindungskanals, PUSCH, zu übertragen, die mindestens eine von einer Slot-Grenze und einem Symbol für eine Downlink-, DL-, Übertragung überschreitet, indem die Wiederholungsübertragung an der mindestens einen von einer Slot-Grenze und einem Symbol für eine Downlink-, DL-, Übertragung in eine Vielzahl von Segmenten unterteilt wird; und
einen Steuerabschnitt (210), der ausgebildet ist, wenn die PUSCH-Wiederholungsübertragung eine Übertragung auf einem Aufwärtsverbindungs-Steuerkanal, PUCCH, überlappt, das Übertragen von mindestens einer von Zustellungsbestätigungsinformationen, HARQ-ACK, und Kanalzustandsinformationen, CSI, unter Verwendung eines zeitlich ersten Segments aus der Vielzahl von Segmenten zu steuern.

2. Funkkommunikationsverfahren für ein Endgerät (20), umfassend:
Übertragen einer Wiederholungsübertragung eines Aufwärtsverbindungskanals, PUSCH, die mindestens eine von einer Slot-Grenze und einem Symbol für eine Downlink-, DL-, Übertragung überschreitet, indem die Wiederholungsübertragung an der mindestens einen von einer Slot-Grenze und einem Symbol für eine Downlink-, DL-, Übertragung in eine Vielzahl von Segmenten unterteilt wird; und
wenn die PUSCH-Wiederholungsübertragung eine Übertragung auf einem Aufwärtsverbindungs-Steuerkanal, PUCCH, überlappt, steuern des Übertragens von mindestens einer von Zustellungsbestätigungsinformationen, HARQ-ACK, und Kanalzustandsinformationen, CSI, unter Verwendung eines zeitlich ersten Segments aus der Vielzahl von Segmenten.

3. System, umfassend ein Endgerät nach Anspruch 1
und eine Basisstation (10), umfassend einen Empfangsabschnitt, der ausgebildet ist, die PUSCH-Wiederholungsübertragung, die in die Vielzahl von Segmenten unterteilt ist, zu empfangen.

## Revendications

1. Terminal (20) comprenant :
une section de transmission (220), configurée de manière à transmettre une transmission répétée de canal partagé de liaison montante, PUSCH, qui traverse au moins un parmi une limite de slot et un symbole pour une transmission de liaison descendante, DL, en divisant la transmission répétée en une pluralité de segments au niveau dudit au moins un parmi une limite de slot et un symbole pour une transmission de liaison descendante, DL ; et
une section de commande (210), configurée de manière à, lorsque la transmission répétée PUSCH chevauche une transmission de canal de commande de liaison montante, PUCCH, commander de transmettre au moins une parmi l'information d'accusé de réception de délivrance, HARQ-ACK, et l'information d'état de canal, CSI, en utilisant un premier segment dans un domaine temporel parmi la pluralité de segments.

2. Procédé de communication radio pour un terminal (20), comprenant :
le fait de transmettre une transmission répétée de canal partagé de liaison montante, PUSCH, qui traverse au moins un parmi une limite de slot et un symbole pour une transmission de liaison descendante, DL, en divisant la transmission répétée en une pluralité de segments au niveau dudit au moins un parmi une limite de slot et un symbole pour une transmission de liaison descendante, DL ; et,
lorsque la transmission répétée PUSCH chevauche une transmission de canal de commande de liaison montante, PUCCH, le fait d'agir de manière à transmettre au moins une parmi l'information d'accusé de réception de délivrance, HARQ-ACK, et l'information d'état de canal, CSI, en utilisant un premier segment dans un domaine temporel parmi la pluralité de segments.

3. Système comprenant un terminal selon la revendication 1 et une station de base (10) comprenant une section de réception configurée de manière à recevoir la transmission répétée PUSCH qui est divisée en la pluralité de segments.
